# EUROPEAN PATENT SPECIFICATION

(11) **EP 1 683 143 B1**
(45) Date of publication and mention of the grant of the patent: **20.01.2010**
(21) Application number: 04770344.2
(22) Date of filing: 01.11.2004
(51) Int. Cl.: G11B 7/24

(54) **REWRITABLE OPTICAL DATA STORAGE MEDIUM AND USE OF SUCH A MEDIUM**
MEHRMALSBESCHREIBBARES OPTISCHES DATENSPEICHERMEDIUM UND VERWENDUNG EINES SOLCHEN MEDIUMS
SUPPORT OPTIQUE REINSCRIPTIBLE DE STOCKAGE DE DONNEES ET SON UTILISATION

(30) Priority: 03.11.2003 EP 03104055
(43) Date of publication of application: 26.07.2006
(73) Proprietor: Koninklijke Philips Electronics N.V., 5621 BA Eindhoven (NL)
(72) Inventor: VAN PIETERSON, Liesbeth, NL-5656 AA Eindhoven (NL); RIJPERS, Johannes, C., N., NL-5656 AA Eindhoven (NL)
(74) Representative: van Liempd, Jan
(86) International application number: PCT/IB2004/052249
(87) International publication number: WO 2005/043524

(56) References cited:
- EP-A- 1 343 154
- WO-A-02/099797
- PATENT ABSTRACTS OF JAPAN vol. 1999, no. 03, 31 March 1999 (1999-03-31) & JP 10 320831 A (RICOH CO LTD), 4 December 1998 (1998-12-04)
- PATENT ABSTRACTS OF JAPAN vol. 2003, no. 12, 5 December 2003 (2003-12-05) & JP 2003 228884 A (RICOH CO LTD), 15 August 2003 (2003-08-15)

## Description

The invention relates to a rewritable optical data storage medium for high-speed recording by means of a focused radiation beam, said medium comprising a substrate carrying a stack of layers, which stack comprises, a substantially transparent first auxiliary layer 11, a substantially tranparent second auxiliary layer I2 having a thickness d_{I2}, and a recording layer of a phase-change material having a thickness d_{P} and comprising at least a composition GeₓSn_{y}Sb_{1-x-y}, where 0.05 < x < 0.30 and 0.15 < y < 0.30, which recording layer is interposed between I1 and I2, and a third auxiliary layer 13 with a thickness d_{I3} acting as a heat sink and being present at a side of 12 opposite to the side of the recording layer.

The invention also relates to the use of such an optical data storage medium.

An embodiment of an optical data storage medium of the type mentioned in the opening paragraph is known from European patent application EP 1343154 A2.

In this document GeₓSn_{y}Sb_{1-x-y} compositions have been proposed as a phase-change material for high-speed rewritable recording. The crystallization speed of the phase-change material depends on the phase-change composition. By varying the Ge-content in the range 5-30 atomic percent, discs can be designed suitable for recording at 2-16x DVD+RW.

An optical data storage medium based on the phase change principle is attractive, because it combines the possibilities of direct overwrite (DOW) and high storage density with easy compatibility with read-only optical data storage systems. Phase-change optical recording involves the formation of submicrometer-sized amorphous recording marks in a crystalline recording layer using a focused relatively high power radiation beam, e.g. a laser-light beam. During recording of information, the medium is moved with respect to the focused laser-light beam that is modulated in accordance with the information to be recorded. Marks are formed when the high power laser-light beam melts the crystalline recording layer. When the laser-light beam is switched off and/or subsequently moved relatively to the recording layer, quenching of the molten marks takes place in the recording layer, leaving an amorphous information mark in the exposed areas of the recording layer that remains crystalline in the unexposed areas. Erasure of written amorphous marks is realized by recrystallization through heating with the same laser at a lower power level, without melting the recording layer. The amorphous marks represent the data bits, which can be read, e.g. via the substrate or a cover layer, by a relatively low-power focused laser-light beam. Reflection differences of the amorphous marks with respect to the crystalline recording layer bring about a modulated laser-light beam which is subsequently converted by a detector into a modulated photocurrent in accordance with the recorded information.

One of the most important demands in phase-change optical recording is a high recording speed or data rate, which means that data can be written and rewritten in the medium with a relatively high linear recording speed of e.g. at least 35 m/s. Such a high data rate requires the recording layer to have a high crystallization speed, i.e. a short crystallization time, during DOW. To ensure that previously recorded amorphous marks can be recrystallized during DOW, the recording layer must have a proper crystallization speed to match the velocity of the medium relative to the laser-light beam. If the crystallization speed is not high enough the amorphous marks from the previous recording, representing old data, cannot be completely erased, meaning recrystallized, during DOW. This causes a high noise level. A high crystallization speed is particularly required in high-density recording and high data rate optical recording media, such as in disk-shaped CD-RW high speed, DVD-RW, DVD+RW, DVD-RAM, BD which are abbreviations of a new generation high density Digital Versatile Disk+RW, where RW refers to the rewritability of such disks, and Blu-ray Disc (BD), where blu refers to the used laser wavelength, i.e. blue. For these disks the complete erasure time (CET) has to be relatively low. CET is defined as the minimum duration of an erasing pulse for complete crystallization of a written amorphous mark in a crystalline environment. The CET is directly related to the maximum DC-erase velocity Vₑₘₐₓ. This Vₑₘₐₓ, inter alia, determines the maximum recording speed. For DVD+RW, which has a 4.7 GB recording density per 120 mm disk, a recording speed of 35 m/s corresponds to a recording velocity of 10 times (10X) the normal velocity. For the other formats this number may vary. For high speed versions of DVD+RW and BD data rates of 50 Mbits/s, corresponding to about 4x DVD and 1x Blu-ray) and higher (10x DVD~110 Mbit/s, are required. For complete erasure of an amorphous mark, two processes are known, i.e. crystallization by nucleation and crystallization by grain crystallite growth. Nucleation of crystallites is a process where nuclei of crystallites are randomly formed in the amorphous material. Therefore the probability of nucleation depends on the volume, e.g. thickness, of the recording material layer. Grain growth crystallization may occur when crystallites are already present, e.g. the crystalline surroundings of an amorphous mark or crystallites which have been formed by nucleation. Grain growth involves the growth of those crystallites by crystallization of amorphous material adjacent the already present crystallites. In practice both mechanisms may occur in parallel but generally one mechanism dominates over the other in terms of efficiency or speed.

Another important demand in phase-change optical recording is a high data stability, which means that recorded data, usually in the form of amorphous marks, remain intact for a long period of time. A high data stability requires the recording layer to have a low crystallization rate, i.e. a long crystallization time, at temperatures below 100°C. During archival storage of the optical data storage medium, written amorphous marks recrystallize at a certain rate, which is determined by the properties of the recording layer. When marks are recrystallized they cannot be distinghuised anymore from the crystalline surrounding, in other words: the mark is erased. For practical purposes a recrystallization time of at least 100 years at room temperature, i.e. 30°C, is needed.

In EP 1343154 A2 the medium of the phase-change type e.g. comprises a disc-shaped substrate of a resin having thereon a 10-100 nm thick first protective layer of a dielectric material, a 10-20 nm-thick recording material layer of a phase-change alloy, a second protective layer of a dielectric material, and a 10-500 nm thick reflective layer of mainly Ag. Such a stack of layers can be referred to as an IPIM-structure, wherein I represents a dielectric layer and P represents a phase-change recording layer and M a metal layer. In said document the second protective layer preferably is at least 10 nm thick in order to surpress deformation of the recording layer. The thickness of each of the recording layer and the protective layer is selected so as to provide good laser light absorbing efficiency and to increase the amplitude of the recording signals, i.e. to increase the contrast between a recorded state and a non-recorded state in consideration of an interfering effect caused by a multilayer structure, in addition to restrictions from mechanical strength and reliability. In writing amorphous marks, the mark length is ideally formed to a length nT, in which formula T is a reference clock period, n is a desired mark length which the mark may have by mark length modulation recording and is an integer. At high linear recording speeds recrystallization of the amorphous marks during recording, i.e. back growth of the interface between amorphous mark and crystalline surrounding, or other distortion of the amorphous mark is likely to occur. In order to prevent this distortion a so-called write strategy is used whereby the marks are written employing a number of short recording pulses according to a predetermined scheme. At higher recording speeds this scheme becomes more complex and more difficult to implement. Furthermore very short recording pulses are required for these complex schemes which are difficult to achieve.

WO 02/099797 A1 discloses a rewritable optical data storage medium and use of such a medium. A phase-change optical data storage medium includes a recording stack with a recording layer and a metal reflective layer comprising at least one transparent layer of the material indium tin oxide (ITO).

It is an object of the invention to provide an optical data storage medium of the kind described in the opening paragraph, capable of being recorded at a relatively high linear recording speed.

By relatively high linear recording speed a linear speed of about 35 m/s of the optical data storage medium relatively to the focused radation recording beam is meant, which e.g. corresponds to a speed of 10 times the normal DVD+RW recording speed, i.e. 10X.

This object is achieved in accordance with the invention by an optical data storage medium as defined in claim 1.

It includes that λ_{I2}/d_{I2} > 5*10⁸ W m⁻² K⁻¹, in which formula λ_{I2} is the heat conduction coefficient of the material of the I2 layer. This coefficient is measured at room temperature using bulk material, e.g. target material in a sputtering deposition apparatus.

A well-designed optical stack is important to diminish recrystallization within the write pulse, i.e. backgrowth. Applicants have had the insight that the amount of recrystallization depends on the crystallization speed of the phase-change material and the heat transport in the stack. Especially for fast-crystallizing materials good heat transport is efficient to prevent recrystallization during writing. It is found by applicant that at recording speeds over 35 m/s (10x DVD+RW) and when the cooling of the recording layer P is relatively low, i.e. λ_{I2}/d_{I2}<5*10⁸ W m⁻² K⁻¹, proper recording is only achieved with a complicated 3T or 4T write strategy (WS), or with a 2T WS with extremely short pulses of e.g. 2 ns or shorter. 2T, 3T or 4T refers to a WS where the number of pulses for recording a mark is reduced by approximately respectively a factor of 2, 3 or 4 compared to T. Writing an nT mark with T WS requires n pulses. By reduction of the number of pulses less backgrowth is achieved. However 3T and 4T write strategies require complicated schemes in order to compensate for the fact that when e.g. an nT mark has to be written n is mostly not dividable by 3 or 4. A 2T write strategy is only usable when very short pulses are used which poses a practical problem on the recording laser and its driver. By applying proper cooling of the recording layer according to formula of claim 1 back growth of marks during writing is counteracted and a 2T WS with more realistic pulse lengths of e.g. 3 ns or 4 ns may be used successfully up to higher speeds.

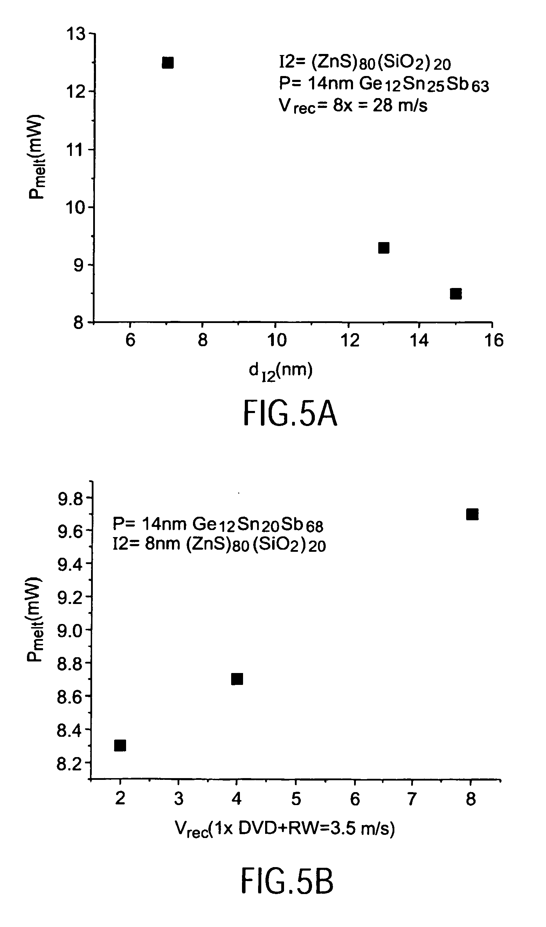

The second auxiliary layer 12 mainly comprises (ZnS)₈₀(SiO₂)₂₀ and d_{I2} < 10 nm. This material is widely used in view of a high layer formation speed, small layer stress, a small volume change due to the change in temperature and an excellent durability against e.g. moisture. Contrary to what is known from prior art a relatively small thickness d_{I2} is advantageous for achieving high recording speeds. However a too small thickness d_{I2} will require too much write power (see Fig. 5A).

In another embodiment the second auxiliary layer I2 comprises at least one selected from the group of Ge₃N₄, Si₃N₄, Al₂O₃, HfₓN_{y}, ITO (In₂O₃:Sn) and Ta₂O₅. These materials have a higher coefficient of thermal conductivity than (ZnS)₈₀(SiO₂)₂₀ and therefore thicker layers maybe used for achieving the same thermal conduction between the recording layer and the third auxiliary layer I3.

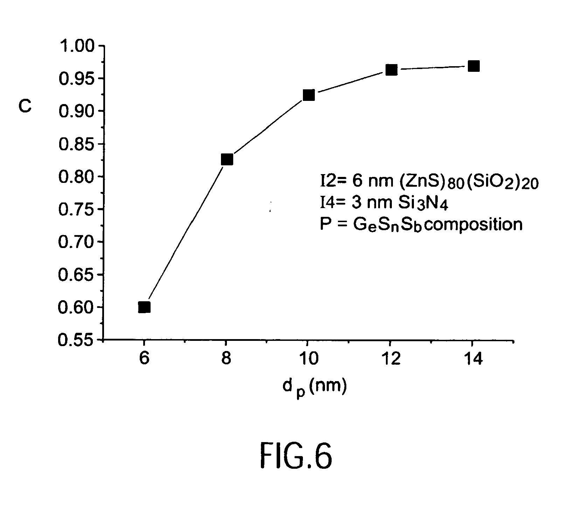

It is advantageous when the thickness d_{P} of the recording layer is smaller than 15 nm. This has the advantage that the recording layer may have a relatively high optical transmission, which is required in case of multi-stack optical media. In a multi-stack optical medium several recording layers are present. The recording/reading laser beam usually is directed through a "higher level" recording layer in order to record/read into/from a "lower level" recording layer in which case the higher level recording layer must be at least partially transparent for the laser beam in order to pass to the "lower level" recording layer. Applicants have found that the backgrowth of marks is also diminished by reducing the recording layer thickness. The value of dₚ should not become too small because of other requirements, e.g. optical contrast and reflection. A minimum thickness would therefore be approximately 8 nm (see Fig. 6).

It is advantageous when the recording layer additionally comprises at least one selected from In, Ag or Cu. When these materials are present e.g. in a concentration up to 10 at.% it is possible to tune the crystallization speed of the phase-change material. The most important way to tune the crystallization speed of GeSnSb-based compositions is by varying the Ge-concentration. It is observed that between 10 and 15 at. % Ge, the crystallization speed increases dramatically. For this reason, it may be helpful to set the crystallization speed by addition of other elements. This is favorable in manufacture where always slight variations in concentrations during deposition will occur.

In an embodiment the third auxiliary layer I3 mainly comprises Ag. Ag is a material with a high coefficient of thermal conductivity. It is therefore suitable as a heat sink with a high heat dissipation capacity. The third auxiliary or reflective layer may aditionally e.g. comprise at least one of the metals selected from a group consisting of Al, Ti, Au, Ag, Cu, Pt, Pd, Ni, Cr, Mo, W and Ta or the like, including alloys of these metals in order to control the thermal conductivity of the reflective layer itself or to improve corrosion resistance. The addition amount is usually at least 0.01 at.% and at most 20 at.%.

It is preferred that the thickness d_{I3} of the third auxiliary layer I3 is at least 150 nm. A better heat dissipation is achieved which diminishes mark backgrowth even more.

It is advantageous that a substantially transparent fourth auxiliary layer 14 is present sandwiched between the third auxiliary layer I3 and the second auxiliary layer 12 screening the third auxiliary layer 13 from a chemical influence of the second auxiliary layer 12. Especially when Ag is used in the third auxiliary or reflective layer I3 the possibility of e.g. S atoms of an auxiliary layer of (ZnS)₈₀(SiO₂)₂₀ reacting with the Ag should be prevented. A suitable fourth auxiliary layer 14 comprises at least one of Si₃N₄ or Ge₃N₄. Preferably the fourth auxiliary layer I4 has a thickness d_{I4} equal or smaller than 3 nm. This small thickness will cause minimal interference with the thermal and optical properties of the stack.

An optimum thickness range for the first auxiliary layer, i.e. the layer through which the radiation beam, e.g. laser-light beam, enters first, is determined by a.o. the laser-light beam wavelength λ. When λ=655 nm an optimum is found around 60 nm.

The first auxiliary layer I1 may be made of a mixture of ZnS and SiO₂, e.g. (ZnS)₈₀(SiO₂)₂₀. Alternatives are, e.g. SiO₂, TiO₂, ZnS, AIN, Si₃N₄ and Ta₂O₅. A carbide may be used, like SiC, WC, TaC, ZrC or TiC. These carbides give a higher crystallization speed and better cyclability than a ZnS-SiO₂ mixture.

The auxiliary layers may be provided by vapor deposition or sputtering.

The substrate of the optical data storage medium consists, for example, of polycarbonate (PC), polymethyl methacrylate (PMMA), amorphous polyolefin or glass. In a typical example, the substrate is disk-shaped and has a diameter of 120 mm and a thickness of e.g. 0.6 or 1.2 mm. When a substrate of 0.6 or 1.2 mm is used, the layers can be applied on this substrate starting with the first auxiliary layer. If the radiation beam enters the stack via the substrate, said substrate must be at least transparent to the radiation beam wavelength. The layers of the stack on the substrate may also be applied in the reversed order, i.e. starting with the third auxiliary layer, in which case the radiation beam will not enter the stack through the substrate. Optionally an outermost transparent layer may be present on the stack as a cover layer that protects the underlying layers from the environment. This layer may consist of one of the above mentioned substrate materials or of a transparent resin, for example, an UV light-cured poly(meth)acrylate with, for example, a thickness of 100 µm. Such a relatively thin cover layer allows a high numerical aperture (NA) of the focused radiation beam, e.g. NA=0.85 and must be of relatively good optical quality and homogeneous. A thin 100 µm cover layer is e.g. used for the Blu Ray Disc (BD). If the radiation beam enters the stack via the entrance face of this transparent layer, the substrate may be opaque.

The surface of the substrate of the optical data storage medium on the side of the recording layer is, preferably, provided with a servotrack that may be scanned optically with the focused radiation beam, e.g. a laser-light beam. This servotrack is often constituted by a spiral-shaped groove and is formed in the substrate by means of a mould during injection molding or pressing. This groove may alternatively be formed in a replication process in a synthetic resin layer, for example, of an UV light-cured layer of acrylate, which is separately provided on the substrate. In high-density recording such a groove has a pitch e.g. of 0.5 - 0.8 µm and a width of about half the pitch.

High-density recording and erasing can be achieved by using a short-wavelength laser, e.g. with a wavelength of 670 nm or shorter (red to blue).

The phase-change recording layer can be applied to the substrate by vapor depositing or sputtering of a suitable target. The layer thus deposited is amorphous. In order to constitute a suitable recording layer this layer must first be completely crystallized, which is commonly referred to as initialization. For this purpose, the recording layer can be heated in a furnace to a temperature above the crystallization temperature of the phase change alloy, e.g. 180°C. A synthetic resin substrate, such as polycarbonate, can alternatively be heated by a laser-light beam of sufficient power. This can be realized, e.g. in a special recorder, in which case the laser-light beam scans the moving recording layer. Such a recorder is also called initializer. The amorphous layer is then locally heated to the temperature required for crystallizing the layer; while preventing that the substrate is being subjected to a disadvantageous heat load.

The invention will be elucidated in greater detail by means of exemplary embodiments and with reference to the accompanying drawings, in which
Fig. 1 shows a schematic cross-sectional view of an optical data storage medium in accordance with the invention,
Figs. 2A, 2B and 2C each show the maximum DC-erase velocity (Ve max) as a function of the thickness of 12 (A), Ag-layer (B) and phase-change recording layer (C). The phase-change material was Ge₁₃Sn₂₀Sb₆₇,
Figs. 3A, 3B and 3C each show the time gap (as a fraction of the period T) at 90 % of the maximum modulation as a function of the maximum DC-erase velocity. For Ge₁₃Sn₂₀Sb₆₇ phase-change material the effect of variation in 12 thickness (Fig.3A), Ag (Fig.3B) and phase-change thickness (Fig.3C) is shown,
Figs. 4A, 4B and 4C each shows the maximum DC-erase velocity as a function of different dopants,
Figs. 5A and 5B respectively show the melt power Pₘₑₗₜ (in mW) as a function of 12 thickness d_{I2} at 8x DVD+RW speed for a P = 14 nm Ge₁₂Sn₂₅Sb₆₃ phase-change layer (5A) and Pₘₑₗₜ as a function of recording speed V_{rec} for P = 14 nm Ge₁₂Sn₂₀Sb₆₈ and I2 = 8 nm ZnS/Si02 (5B),
Fig. 6 shows the optical contrast C as a function of recording layer thickness d_{P}, for a GeSnSb phase-change material with I2 = 6 nm (ZnS)₈₀(SiO₂)₂₀ and 3 nm Si₃N₄.

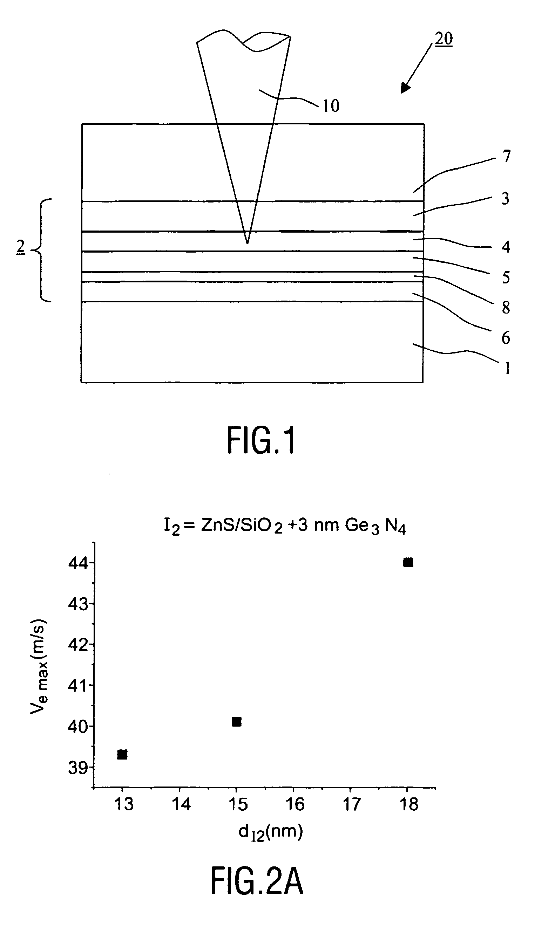

In Fig.1 the rewritable optical data storage medium 20, e.g. a DVD+RW disk, for high-speed recording by means of a focused radiation beam 10, has a substrate 7 and a stack 2 of layers provided thereon. The stack 2 has a first auxiliary layer 3, made of (ZnS)₈₀(SiO₂)₂₀ having a thickness of 90 nm , a second auxiliary layer 5, made of (ZnS)₈₀(SiO₂)₂₀ having a thickness of 6 nm, and a recording layer 4 made of a phase-change material of the alloy with a composition Ge₁₃Sn₂₀Sb₆₇. The heat conduction coefficient λ of (ZnS)₈₀(SiO₂)₂₀ is 8.7 W/mK. The recording layer 4 has a thickness of 14 nm and is interposed between the first auxiliary layer 3 and the second auxiliary layer 5. A third auxiliary layer 6 made of Ag with a thickness d_{I3} = 150 nm acting as a heat sink is present at a side of 12 opposite to the side of the recording layer. A fourth auxiliary layer 8 is present sandwiched between the third auxiliary or reflective layer 6 and the second auxiliary layer 5 screening the third auxiliary layer 6 from a chemical influence of the second auxiliary layer 5. The fourth auxiliary layer comprises Ge₃N₄ and has a thickness of 3 nm. Si₃N₄ and Ge₃N₄ have a larger heat conduction coefficient λ than (ZnS)₈₀(SiO₂)₂₀. Si₃N₄ has a λ of 26 W/mK. The maximum DC-erase velocity V_{e max} was determined as the maximal linear disc velocity at which I14 carriers, i.e nT marks with n=14, initially written with a typical carrier-to-noise ratio of 45 dB, could be reduced at 25 dB.

A second substrate 7, made of PC having a thickness of 0.6 mm is present adjacent the third auxiliary layer 6.

Sputtering provides the layers 3, 4, 5, 6 and 8. The initial crystalline state of the recording layer 4 is obtained by heating the as-deposited amorphous recording layer 4 in an initializer by means of a continuous laser-light beam to above its crystallization temperature.

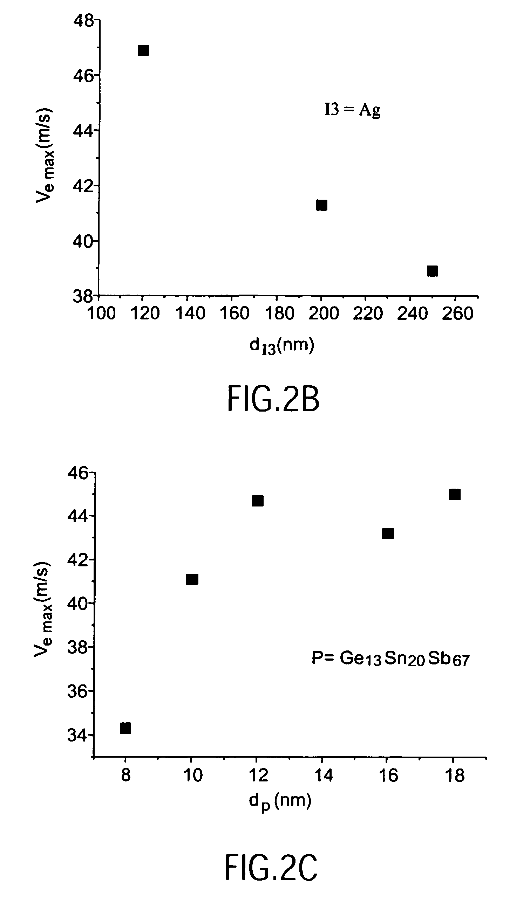

In each of Figs. 2A, 2B and 2C the maximum DC-erase velocity (Vemax) as a function of the thickness of I2 (Fig. 2A), Ag 13-layer (Fig. 2B) and phase-change recording layer (Fig. 2C) is shown for a Ge₁₃Sn₂₀Sb₆₇ phase-change layer. The phase-change material was Ge₁₃Sn₂₀Sb₆₇. In the present invention, we state that the speed of a phase-change disc is also dependent on the layers and layer thickness of the optical stack.. It is observed that the speed increases for thick 12 and phase-change and decreases for thick 13.

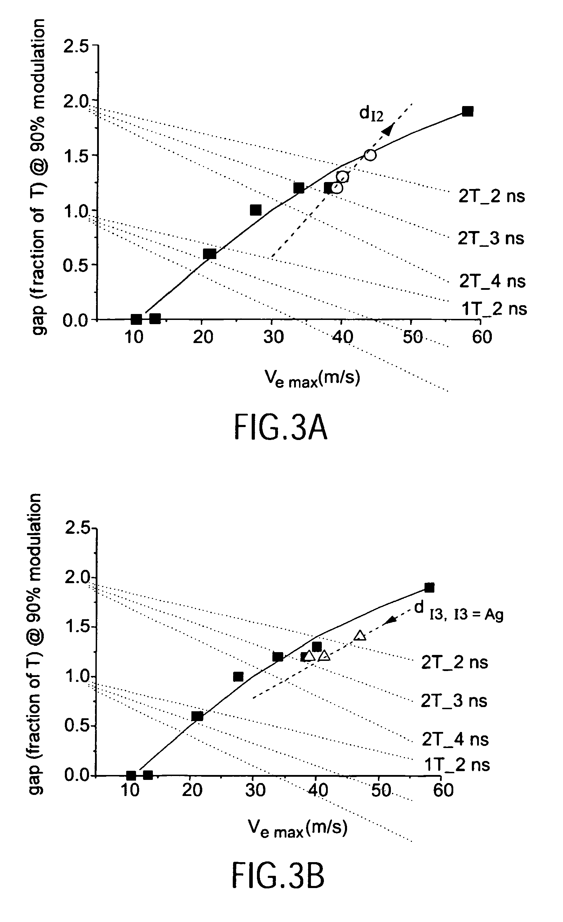

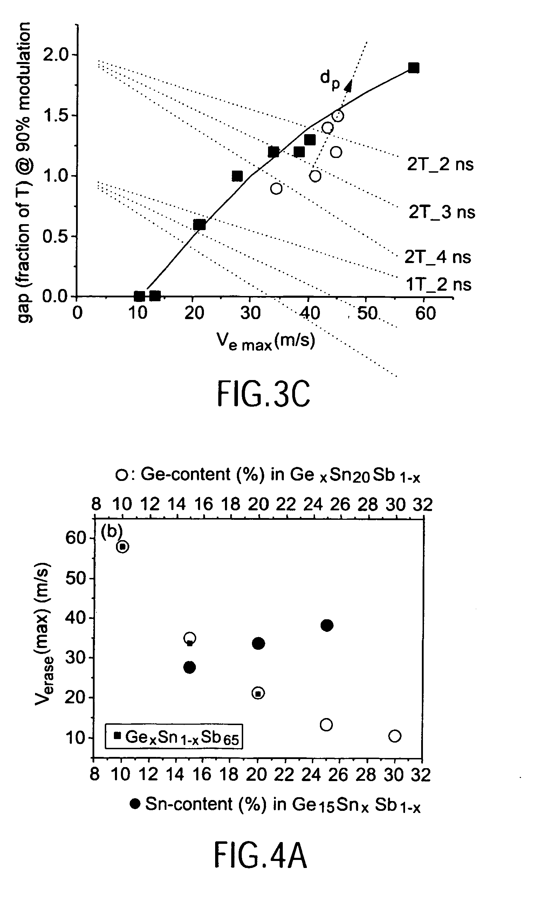

In each of Figs.3A, 3B and 3C the time gap (as a fraction of the period T) at 90 % of the maximum modulation as a function of the maximum DC-erase velocity is shown. This is the minimum gap allowed between write pulses to prevent backgrowth by the subsequent write pulse as a function of the recording speed of the disc. The gap was determined from so-called modulation-reduction experiments, in which I11 carriers are written with an increasing number of pulses and the modulation is measured. With increasing number of pulses to write the I11 (nT with n= 11) carrier, the gap between pulses becomes shorter (22 ns-2 ns @ 4x DVD+RW) and backgrowth by subsequent write pulses may occur, which results in a reduction of the modulation. The curved line with solid squares is the 'composition line' where the disc speed is varied by adjusting the Ge-content in the phase-change layer. Solid squares represent GeSnSb compositions in a moderately cooled stack with 12 = 12 nm (ZnS)₈₀(SiO₂)₂₀ and 3 nm Ge₃N₄, and 150 nm Ag. The dotted straight lines represent write strategies (WS); a disc with coordinates below such a line can be recorded with that WS. Two WS (1T or 2T) and the maximum laser pulse time are plotted. For Ge₁₃Sn₂₀Sb₆₇ phase-change material the effect of variation in I2 (Fig.3A), Ag (Fig.3B) and phase-change recording layer thickness (Fig.3C) is shown. Decreasing the thickness of I2, the thickness of the phase-change recording layer P and increasing the thickness of 13 can shift the points downwards in Figs. 3A, 3B and 3C, so that recording with a simpler WS becomes possible. It should be noted that choosing for 12 a layer with a higher thermal conductivity, like Ge₃N₄ or Ta₂O₅ would give a results similar to lowering the thickness of 12. So a well-designed optical stack is important to diminish recrystallization within the write pulse. As said the amount of backgrowth recrystallization depends on the crystallization speed of the phase-change material and the heat transport in the stack. It may be clear that especially for fast-crystallizing materials heat transport should be efficient to prevent recrystallization during writing. It is observed that at speeds over 35 m/s (10x DVD+RW) the moderately cooled discs of the composition line (solid squares) can only be recorded with complicated WS (3T or 4T), or with a 2T WS with extremely short pulses of 2 ns or shorter.

To summarize, it is stated that crystallization speed and backgrowth properties of the disc depend on, besides the phase-change composition, the thickness of 12, heat sink layer 13 and phase-change recording layer. Especially at linear velocities over 35 m/s (recording speeds over 10x DVD+RW), efficiently cooled stacks have to be designed that facilitate recording with relatively 'simple' WS. Effectively, this means 12- thickness below 9 nm if (ZnS)₈₀(SiO₂)₂₀ is used as the dielectric layer, and/or phase-change layer thickness d_{P} below 15 nm, in combination with a fast crystallizing phase-change material.

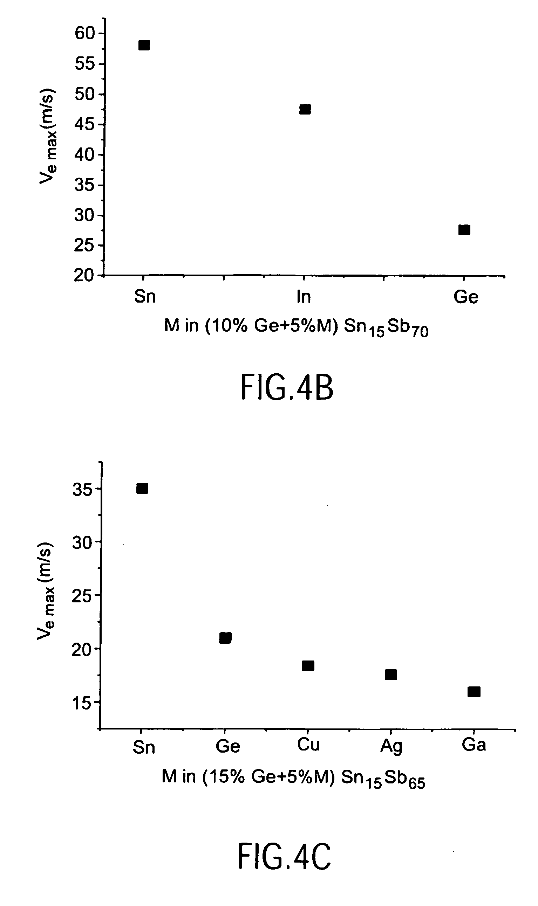

In each of Figs. 4A, 4B and 4C the maximum DC-erase velocity as a function of dopants is plotted. The most important way to tune the crystallization speed of GeSnSb-based compositions is by varying the Ge-content. Fig. 4A shows the maximum DC-erase velocity as a function of the Ge-concentration. It is observed that between 10 and 15 % Ge, the crystallization speed increases dramatically. For this reason, it may be helpful to set the crystallization speed by variation of other elements. From Fig. 4A it can be observed that increasing the Sn concentration increases the crystallization speed. By addition of In, Ag or Cu, or other elements the crystallization speed can be lowered (Figs. 4B and 4C). The first solid square of Fig. 4B corresponds to the label (B) in Fig. 4A.

In Figure 5A and 5B respectively the melt power Pₘₑₗₜ (in mW) as a function of d_{I2=(ZnS)80(SiO2)20} at 8x DVD+RW speed for a P = 14 nm Ge₁₂Sn₂₅Sb₆₃ phase-change layer (5A) and Pₘₑₗₜ, as a function of recording speed V_{rec} for P = 14 nm Ge₁₂Sn₂₀Sb₆₈ and 12 = 8 nm (ZnS)₈₀(SiO₂)₂₀ (5B) are shown. The value of the parameter d_{I2} at the bottom side is in practice limited by the sensitivity of the medium. Pₘₑₗₜ is the minimum (DC) power to melt the phase-change layer. It is observed that the sensitivity decreases with d_{I2}, i.e.larger powers have to be applied to write data marks. Fig. 5B shows furthermore that at high speeds larger powers are needed to melt the phase-change material, as a result of the shorter dwell time of the laser spot at a certain position at the disc. In practice, this sets limits to the minimum 12-thickness at high speeds, as no infinite laser powers can be applied. For current high power laser diodes, a maximum power on the disc of about 20 mW is reasonable.

In Figure 6 the optical contrast C as a function of phase-change layer thickness d_{P} for phase-change material GeSnSb with I2=6 nm (ZnS)₈₀(SiO₂)₂₀ and 3 nm Si₃N₄ is shown. The lower limit of the phase-change layer thickness d_{P} is determined by the optical contrast C that can be achieved for a 'common' optical stack. Fig. 6 shows that the maximum optical contrast C for a stack with I2 of 6 nm (ZnS)₈₀(SiO₂)₂₀ and 3 nm Si₃N₄ and a Ag heat sink decreases rapidly with the phase-change layer thickness d_{P}. Therefore, a minimum phase-change thickness d_{P} of about 8 nm is proposed for single layer DVD+RW.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The mere fact that certain measures are recited in mutually different dependent claims does not indicate that a combination of these measures cannot be used to advantage.

## Claims

1. A rewritable optical data storage medium (20) for high-speed recording by means of a focused radiation beam (10), said medium comprising a substrate (7) carrying a stack (2) of layers, which stack comprises, a substantially transparent first auxiliary layer I1 (3), a substantially tranparent second auxiliary layer I2 (5) having a thickness d_{I2} , and a recording layer (4) of a phase-change material comprising a composition GeₓSn_{y}Sb_{1-x-y}, where 0.05 < x < 0.30 and 0.15 < y < 0.30, which recording layer is interposed between I1 and I2, and a third auxiliary layer I3 (6) with a thickness d_{I3} acting as a heat sink and being present at a side of I2 opposite to the side of the recording layer, wherein λ_{I2}/d_{I2} > 5*10⁸ W m⁻² K⁻¹, in which formula λ_{I2} is the heat conduction coefficient of the material of the I2 layer, **characterized in that** a substantially transparent fourth auxiliary layer I4 (8) is present between the third auxiliary layer I3 (6) and the second auxiliary layer I2 (5) screening the third auxiliary layer I3 from a chemical influence of the second auxiliary layer I2, wherein the fourth auxiliary layer I4 (8) comprises Si₃N₄.

2. An optical data storage medium (20) as claimed in Claim 1, wherein the second auxiliary layer I2 mainly comprises (ZnS)₈₀(SiO₂)₂₀ and d_{I2} < 10 nm.

3. An optical data storage medium (20) as claimed in Claim 1, wherein the second auxiliary layer I2 comprises at least one selected from the group of Ge₃N₄, Si₃N₄, Al₂O₃, HfₓN_{y}, ITO (In₂O₃:Sn) and Ta₂O₅.

4. An optical data storage medium (20) as claimed in any one of Claims 1, 2 or 3, wherein the recording layer (4) has a thickness d_{P} and d_{P} is smaller than 15 nm.

5. An optical data storage medium (20) as claimed in any one of Claims 1, 2, 3 or 4, wherein the recording layer additionally comprises at least one selected from In, Ag or Cu.

6. An optical data storage medium (20) as claimed in Claim 5, wherein the at least one is present in a concentration up to 10 at.%.

7. An optical data storage medium (20) as claimed in Claim 1, wherein the third auxiliary layer I3 mainly comprises Ag.

8. An optical data storage medium (20) as claimed in Claim 7, wherein the thickness d_{I3} of the third auxiliary layer I3 is at least 150 nm.

9. An optical data storage medium as claimed in Claim 1, wherein the fourth auxiliary layer I4 (8) additionally comprises Ge₃N₄.

10. An optical data storage medium as claimed in Claim 9, wherein the fourth auxiliary layer I4 has a thickness d_{I4} ≤ 3 nm.

11. Use of an optical data storage medium (20) according to any one of the preceding Claims for high speed recording with a recording speed of at least 35 m/s.

## Patentansprüche

1. Mehrmals beschreibbares Datenspeichermedium (20) zur Hochgeschwindigkeitsaufzeichnung mit Hilfe eines fokussierten Strahlungsbündels (10), wobei das genannte Medium ein Substrat (7) aufweist, das einen Stapel (2) Schichten trägt, wobei dieser Stapel eine im Wesentlichen transparente erste Hilfsschicht I1 (3), eine im Wesentlichen transparente zweite Hilfsschicht I2 (5) einer Dicke d_{I2}, und eine Aufzeichnungsschicht (4) aus einem Phasenänderungsmaterial einer Zusammensetzung GeₓSn_{y}Sb_{1-x-y} umfasst, wobei 0,05 < x < 0,30 und 0,15 < y < 0,30 ist, wobei diese Aufzeichnungsschicht zwischen I1 und I2 vorgesehen ist, sowie eine dritte Hilfsschicht I3 (6) einer Dicke d_{I3}, die als eine Wärmeableitung wirksam ist und an einer Seite von I2, gegenüber der Seite der Aufzeichnungsschicht, vorgesehen ist, wobei λ_{I2}/d_{I2} > 5*10⁸ W m⁻² K⁻¹ ist, wobei in dieser Formel λ_{I2} der Wärmeleitkoeffizient des Materials der I2 Schicht ist, **dadurch gekennzeichnet, dass** zwischen der dritten Hilfsschicht I3 (6) und der zweiten Hilfsschicht I2 (5) eine im Wesentlichen vierte Hilfsschicht I4 (8) vorgesehen ist, welche die dritte Hilfsschicht I3 gegen chemischen Einfluss der zweiten Hilfsschicht I2 abschirmt, wobei die vierte Hilfsschicht I4 (8) Si₃N₄ aufweist.

2. Optisches Datenspeichermedium (20) nach Anspruch 1, wobei die zweite Hilfsschicht I2 vorwiegend (ZnS)₈₀(SiO₂)₂₀ aufweist und d_{I2} < 10 nm ist.

3. Optisches Datenspeichermedium (20) nach Anspruch 1, wobei die zweite Hilfsschicht I2 wenigstens ein Element aufweist, selektiert aus der nachfolgenden Gruppe Ge₃H₄, Si₃N₄, Al₂O₃, HfₓN_{y}, ITO (In₂O₃;Sn) und Ta₂O₅.

4. Optisches Datenspeichermedium (20) nach einem der Ansprüche 1, 2 oder 3, wobei die Aufzeichnungsschicht (4) eine Dicke dₚ hat und wobei dₚ kleiner als 15 nm ist.

5. Optisches Datenspeichermedium (20) nach einem der Ansprüche 1, 2, 3 oder 4, wobei die Aufzeichnungsschicht zusätzlich wenigstens ein Element aufweist, selektiert aus In, Ag oder Cu.

6. Optisches Datenspeichermittel (20) nach Anspruch 5, wobei das wenigstens eine Element in einer Konzentration von bis 10 Atomprozent vorhanden ist.

7. optisches Datenspeichermedium (20) nach Anspruch 1, wobei die dritte Hilfsschicht I3 vorwiegend Ag aufweist.

8. Optisches Datenspeichermedium (20) nach Anspruch 7, wobei die Dicke d_{I3} der dritten Hilfsschicht I3 wenigstens 150 nm beträgt.

9. Optisches Datenspeichermedium nach Anspruch 1, wobei die vierte Hilfsschicht I4 zusätzlich Ge₃N₄ aufweist.

10. Optisches Datenspeichermittel nach Anspruch 9, wobei die vierte Hilfsschicht I4 eine Dicke d_{I4} ≤ 3 nm hat.

11. Verwendung eines optischen Datenspeichermediums (20) nach einem der vorstehenden Ansprüche zur Hochgeschwindigkeitsaufzeichnung mit einer Aufzeichnungsgeschwindigkeit von wenigstens 35 m/s.

## Revendications

1. Support optique réinscriptible de stockage de données (20) pour enregistrement à grande vitesse au moyen d'un faisceau de rayonnement concentré (10), ledit support comprenant un substrat (7) portant une pile (2) de couches, laquelle pile comprend une première couche auxiliaire sensiblement transparente I1 (3), une deuxième couche auxiliaire sensiblement transparente I2 (5) ayant une épaisseur d_{I2}, et une couche d'enregistrement (4) d'un matériau à changement de phase comprenant une composition GeₓSn_{y}Sb_{1-x-y}, où 0,05 < x < 0,30 et 0,15 < y < 0,30, laquelle couche d'enregistrement est interposée entre I1 et I2, et une troisième couche auxiliaire I3 (6) avec une épaisseur d_{I3} agissant en tant que dissipateur thermique et étant présente d'un côté de I2 opposé au côté de la couche d'enregistrement, dans lequel λ_{I2}/d_{I2} > 5*10⁸ W m⁻² K⁻¹, dans laquelle formule λ_{I2} est le coefficient de conduction thermique du matériau de la couche I2, **caractérisé en ce qu'**une quatrième couche auxiliaire sensiblement transparente I4 (8) est présente entre la troisième couche auxiliaire I3 (6) et la deuxième couche auxiliaire I2 (5) en protégeant la troisième couche auxiliaire I3 contre une influence chimique de la deuxième couche auxiliaire I2, dans lequel la quatrième couche auxiliaire I4 (8) comprend Si₃N₄.

2. Support optique de stockage de données (20) selon la revendication 1, dans lequel la deuxième couche auxiliaire I2 comprend principalement (ZnS)₈₀(SiO₂)₂₀ et d_{I2} < 10 nm.

3. Support optique de stockage de données (20) selon la revendication 1, dans lequel la deuxième couche auxiliaire I2 comprend au moins l'un sélectionné dans le groupe de Ge₃N₄, Si₃N₄, Al₂O₃, HfₓN_{y}, ITO (In₂O₃:Sn) et Ta₂O₅.

4. Support optique de stockage de données (20) selon l'une quelconque des revendications 1, 2 ou 3, dans lequel la couche d'enregistrement (4) a une épaisseur d_{P} et d_{P} est inférieure à 15 nm.

5. Support optique de stockage de données (20) selon l'une quelconque des revendications 1, 2, 3 ou 4, dans lequel la couche d'enregistrement comprend en outre au moins l'un sélectionné parmi In, Ag et Cu.

6. Support optique de stockage de données (20) selon la revendication 5, dans lequel l'au moins un est présent à une concentration jusqu'à 10 at. %.

7. Support optique de stockage de données (20) selon la revendication 1, dans lequel la troisième couche auxiliaire I3 comprend principalement Ag.

8. Support optique de stockage de données (20) selon la revendication 7, dans lequel l'épaisseur d_{I3} de la troisième couche I3 est au moins 150 nm.

9. Support optique de stockage de données selon la revendication 1, dans lequel la quatrième couche auxiliaire I4 (8) comprend en outre Ge₃N₄.

10. Support optique de stockage de données selon la revendication 9, dans lequel la quatrième couche auxiliaire I4 a une épaisseur d_{I4} ≤ 3 nm.

11. Utilisation d'un support optique de stockage de données (20) selon l'une quelconque des revendications précédentes pour enregistrement à grande vitesse avec une vitesse d'enregistrement d'au moins 35 m/s.
